(19) Europäisches Patentamt / European Patent Office / Office européen des brevets

(11) **EP 1 893 974 B1**

(12) **EUROPÄISCHE PATENTSCHRIFT**

(45) Veröffentlichungstag und Bekanntmachung des Hinweises auf die Patenterteilung:
**15.04.2009 Patentblatt 2009/16**

(21) Anmeldenummer: 06777309.3

(22) Anmeldetag: **12.06.2006**

(51) Int Cl.:
*G01N 13/02* *(2006.01)*

(86) Internationale Anmeldenummer:
**PCT/EP2006/063105**

(87) Internationale Veröffentlichungsnummer:
**WO 2006/131568 (14.12.2006 Gazette 2006/50)**

(54) **VERFAHREN UND VORRICHTUNG ZUM PRÜFEN EINER OBERFLÄCHENGÜTE**

METHOD AND DEVICE FOR TESTING A SURFACE QUALITY

PROCEDE ET DISPOSITIF POUR CONTROLER LA QUALITE D'UNE SURFACE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **10.06.2005 DE 102005027106**

(43) Veröffentlichungstag der Anmeldung:
**05.03.2008 Patentblatt 2008/10**

(73) Patentinhaber: **Fraunhofer-Gesellschaft zur Förderung der angewandten Forschung e.V.
80686 München (DE)**

(72) Erfinder:
• **WILKEN, Ralph
  26180 Rastede (DE)**
• **MARKUS, Susanne
  28203 Bremen (DE)**
• **AMKREUTZ, Marc
  28865 Lilienthal (DE)**
• **TORNOW, Christian
  28203 Bremen (DE)**
• **SEILER, Andreas
  28777 Bremen (DE)**
• **DIECKHOFF, Stefan
  28865 Lilienthal (DE)**
• **MEYER, Udo
  28777 Bremen (DE)**

(74) Vertreter: **Eisenführ, Speiser & Partner
Patentanwälte Rechtsanwälte
Postfach 10 60 78
28060 Bremen (DE)**

(56) Entgegenhaltungen:
DE-A1- 10 207 282          DE-U1- 29 919 100
US-A- 5 756 885

• PATENT ABSTRACTS OF JAPAN Bd. 016, Nr. 199 (P-1351), 13. Mai 1992 (1992-05-13) & JP 04 031740 A (FUJITSU LTD), 3. Februar 1992 (1992-02-03)
• PATENT ABSTRACTS OF JAPAN Bd. 017, Nr. 681 (P-1660), 14. Dezember 1993 (1993-12-14) & JP 05 232009 A (NAGOYASHI), 7. September 1993 (1993-09-07)

## Beschreibung

Die vorliegende Erfindung betrifft ein Prüfverfahren zum Prüfen einer Oberflächengüte und ein Prüfsystem zum Durchführen eines solchen Prüfverfahrens.

Das Einhalten einer bestimmten Mindest-Oberflächengüte ist vor allen Dingen in Kleb-, Lackier-, Druck- und Beschichtungsverfahren unverzichtbar. Zum Durchführen dieser Verfahren werden gute Adhäsions- und Benetzungseigenschaften der zu behandelnden Bauteiloberflächen vorausgesetzt. Die Eigenschaften dieser zu verarbeitenden Oberflächen werden häufig bereits in formgebenden Prozessen wie beispielsweise Polymerspritzguss oder Metalldruckguss bestimmt; in diesen Prozessen werden Bauteile häufig durch Trennmittel auf Basis von Silikonen, Ölen oder Wachsen verunreinigt. Auch bei mechanischer Bearbeitung durch spanende Verfahren können Kontaminationen der Bauteiloberfläche durch Kühlemulsionen und Schneidöle auftreten.

Die Bauteiloberflächen werden deshalb vor der Weiterverarbeitung häufig durch eine Reinigung oder Aktivierung vorbehandelt. Beispielsweise werden Polypropylen vor dem Lackieren und Polyethylen vor dem Bedrucken beflammt oder mit Plasma behandelt. Diese Vorbehandlungen bestimmen maßgeblich die Benetzungseigenschaften der so behandelten Bauteile. Störungen des Vorbehandlungsprozesses können zu verminderten Benetzungs- und Adhäsionseigenschaften führen.

Zum Prüfen der Oberflächengüte und insbesondere der Benetzungseigenschaften einer Oberfläche werden üblicherweise Kontaktwinkelmessungen eingesetzt. Dabei wird auf der zu beurteilenden Oberfläche ein Tropfen einer Prüfflüssigkeit aufgetragen und von der Seite beleuchtet. Der Kontaktwinkel wird dann manuell bestimmt, indem ein Winkelmessgerät an das Kreissegment des Flüssigkeitstropfens im Schnittpunkt mit der Oberfläche tangential angelegt und der Kontaktwinkel abgelesen wird.

Die US 3,618,374 offenbart eine Beziehung zwischen dem Durchmesser eines Tropfens bekannten Volumens einer Oberfläche und dem Kontaktwinkel. Bei Applikation eines Tropfes mit bekanntem Volumen auf eine Oberfläche wird der Kontaktwinkel durch Bestimmen des Tropfendurchmessers ermittelt. Das Aufbringen einzelner Tropfen mit genau definiertem Volumen ist jedoch zeitaufwändig und zum Prüfen der Güte einer großen Oberfläche ungeeignet. Zudem ist die in dieser Patentschrift offenbarte Beziehung zwischen dem Tropfendurchmesser und dem Kontaktwinkel nicht korrekt. Vergleichbare Verfahren zum Bestimmen des Kontaktwinkels mit Hilfe von Tropfen definierten Volumens sind bekannt aus der US 5,756,885, WO 03/073045 A1 und JP 52-32009.

Ferner offenbaren H. B. Linford und E. B. Saubestre in Plating, August 1951, 847 bis 855 "Cleaning an preparation of metals for electroplating - Degreasing evaluation tests: The atomizer test" ein Verfahren, bei dem eine mit Niagara Sky Blue 6B (National Aniline & Dye) gefärbte Prüfflüssigkeit auf eine zu prüfende Metalloberfläche aufgesprüht wird. Die aufgesprühten Tropfen werden getrocknet und das Verteilungsmuster des auf der Oberfläche niedergeschlagenen Farbstoffs wird von einem Prüfer erfasst. Das Prüfverfahren erfordert einiges handwerkliches Geschick und eignet sich zudem nur zum Prüfen von Oberflächen, auf denen Wasser gut spreitet. Eine Vorrichtung und ein Verfahren zum Erzeugen eines Prüftinten-Sprühnebels sind bekannt aus der DE 299 19 100 U1.

Die Offenlegungsschrift DE 10 207 282 A1 beschreibt die Bestimmung des Kontaktwinkels an jedem einzelnen Tropfen aus einer Vielzahl von Tropfen auf einer Oberfläche mit Hilfe der Bildverarbeitung. Bei den Tropfen handelt es sich um mit einer Mikropipette aufgebrachte Tropfen definierter Größe. Mit Hilfe eines bildgebenden Sensors werden die Auflageflächen und zugehörigen Radien der Einzeltropfen ermittelt und die mittleren Kontaktwinkel der Tropfen errechnet, wobei der Verlauf des Kontaktwinkels als Funktion des Tropfenradius in Abhängigkeit vom Tropfenvolumen eindeutig festliegt. Der Kontatwinkel wird als maß für die Benetzung der Oberfläche verwendet.

Aufgabe der vorliegenden Erfindung war es, ein Prüfverfahren und ein entsprechendes Prüfsystem bereitzustellen, mit dem auf möglichst einfache Weise die Güte einer Oberfläche bestimmt werden kann. Das Verfahren sollte möglichst genau sein, reproduzierbare Ergebnisse liefern, leicht und billig durchführbar sein, auf unterschiedliche Oberflächen übertragbar sein und schnelle Prüfergebnisse liefern.

Die Aufgabe wird hinsichtlich des Verfahrensaspekts gelöst durch ein Prüfverfahren zum Prüfen einer Oberflächengüte gemäß Anspruch 1, umfassend die Schritte:

a) Erzeugen eines Sprühnebels einer Prüfflüssigkeit,

b) Inkontaktbringen der zu prüfenden Oberfläche mit dem Sprühnebel, um auf der zu prüfende Oberfläche Tropfen des Sprühnebels anzuordnen,

c) in einem vorgewählten Bereich der zu prüfenden Oberfläche gleichzeitiges Erfassen der in dem Bereich angeordneten Tropfen,

d) Bestimmen der Werteverteilung einer Tropfeneigenschaft, und

e) Vergleich der ermittelten Werteverteilung mit einer Referenz-Werteverteilung zum Ermitteln der Oberflächengüte des vorgewählten Bereichs.

Im Unterschied zu den bisherigen Verfahren des Standes der Technik vermeidet das erfindungsgemäße Verfahren sowohl die Notwendigkeit, Tropfen eines definierten und genau eingestellten Volumens auf der zu prüfenden Oberfläche einzeln oder nacheinander aufzubringen, als auch die Notwendigkeit, eine Prüfflüssigkeit einzutrocknen und seine Trockeneigenschaften anhand eines eingetrockneten Farbmusters zu erfassen.

Die Erfindung geht dabei von der Erkenntnis aus, dass zum Prüfen einer Oberflächengüte, namentlich der Benetzungseigenschaften einer Oberfläche, die Kontaktwinkel von Prüfflüssigkeits-Tröpfchen nicht nur bei einem vorgegebenen Tropfenvolumen bestimmbar sind, sondern bereits dann, wenn die Verteilungsfunktion zufällig erzeugter Tröpfchenvolumina (wie beispielsweise in einem Sprühnebel) bekannt ist oder anhand von Kalibrierungen geschätzt werden kann. Im Unterschied zu herkömmlichen Prüfverfahren ist es mit dem erfindungsgemäßen Verfahren erstmals möglich, gleichzeitig mehrere Tropfen in einem vorgewählten Bereich der zu prüfenden Oberfläche beispielsweise fotografisch zu erfassen und die Oberflächengüte anhand der erfassten Tropfen zu bestimmen. Herkömmlicherweise mussten Tropfen nacheinander aufgebracht und einzeln ausgewertet werden, oder es musste gewartet werden, bis die Prüfflüssigkeit eintrocknet und ein Farbstoffmuster hinterlässt.

Im ersten Schritt des erfindungsgemäßen Verfahrens wird ein Sprühnebel einer Prüfflüssigkeit erzeugt. Dieser Sprühnebel kann mit üblichen Zerstäuberdüsen, insbesondere abgestimmt auf die jeweilige Prüfflüssigkeit, erzeugt werden. Aerosole mit einer ausreichend schmalen Tropfengrößenverteilung liefern beispielsweise Zweistoffzerstäuberdüsen, die nach dem Druckprinzip arbeiten. Beispielsweise lassen sich mit der Flachstrahlzerstäuberdüse 156.640.16.16.0.0. 303SS der Fa. Lechler GmbH bei Drücken der Druckluft zwischen 0.2 bar bis 1.5 bar Aerosole mit mittleren Durchmessern zwischen 20µm bis 150µm erzeugen. Vorzugsweise wird der Sprühnebel erzeugt mit Hilfe eines Ultraschallzerstäubers. Ultraschallzerstäuber sind besonders geeignet zum bilden feinster Prüfflüssigkeitströpfchen, insbesondere mit einem mittleren Tröpfchendurchmesser von 25 bis 100 µm. Die Verwendung von Prüfflüssigkeitströpfchen mit mittleren Durchmessern von 20 bis 40 µm, insbesondere von 25 bis 35 µm, und insbesondere mit einem mittleren Durchmesser von 30 µm, liefert besonders gute Beurteilungsergebnisse und ist entsprechend besonders bevorzugt. Neben einem Ultraschallzerstäuber ist zum Herstellen des Sprühnebels auch ein Zerstäuber zum Herstellen monodisperser Sprays bevorzugt, wie er beschrieben ist in E.K. Dabora, "Production of Monodisperse Sprays", Review of Scientific Instruments 1967, Vol. 38 Nr. 4, S. 502-506. Der Offenbarungsgehalt dieser Veröffentlichung wird hiermit zum Zwecke der Offenbarung der vorliegenden Erfindung in Bezug genommen. Dabei ist die Tropfengröße der Sprühnebel-Tropfen besonders einfach und genau einstellbar, die Größenverteilung der Tropfen des Sprühnebels ist praktisch monodispers. Dies erleichtert das Bestimmen der Werteverteilung der Tropfeneigenschaft, nachdem die Tropfen auf der zu prüfenden Oberfläche, beispielsweise durch Aufsprühen, angeordnet wurden.

Die Prüfflüssigkeit ist vorzugsweise ausgewählt aus der Gruppe bestehend aus Wasser, Formamid, Ethylenglykolmonoethylether, Aceton, Alkoholen, insbesondere Methanol und Ethanol, Alkanen, insbesondere Hexan und Pentan, und Mischungen zweier oder mehrerer dieser Substanzen. Die Prüfflüssigkeit ist dabei zweckmäßigerweise so ausgewählt, dass Prüfflüssigkeitströpfchen (insbesondere mit einem mittleren Tröpfchendurchmesser von 25 bis 35 µm und vorzugsweise von 30 µm) nach dem Anordnen auf der zu beurteilenden Oberfläche dort einen Kontaktwinkel von höchstens 130° aufweisen, vorzugsweise von höchstens 120°, wobei die Kontaktwinkelangaben bezogen sind auf eine Oberfläche mit vorgewählter hoher Oberflächengüte, insbesondere eine unverschmutzte Oberfläche. Bis zu einem Kontaktwinkel von 130°, besser noch bis zu einem Kontaktwinkel von 120°, führen auch kleine Kontaktwinkelabweichungen von einem erwarteten Kontaktwinkel zu starken Unterschieden im Durchmesser der auf der Oberfläche angeordneten Prüfflüssigkeitströpfchen. Durch Verwendung entsprechender Prüfflüssigkeiten ist es daher besonders einfach möglich, aus dem Bestimmen einer Tröpfchendurchmesser-Verteilung und bei bekannter Tropfenvolumen-Verteilung auf die Oberflächengüte der mit den Prüfflüssigkeitströpfchen versehenen Oberfläche zu schließen.

Die Prüfflüssigkeit wählt der Fachmann zweckmäßigerweise anhand der ihm bekannten Oberflächenenergien der reinen Flüssigkeiten aus. Die Oberflächenenergie, auch freie Oberflächenenergie genannt, ist für die Zwecke dieser Beschreibung die Arbeit, die zur Schaffung einer Phasengrenzfläche Stoff/Vakuum erforderlich ist. Die Oberflächenenergie hat die physikalische Dimension Energie pro Fläche od. Kraft pro Länge. Bei Flüssigkeiten wird die Oberflächenenergie auch Oberflächenspannung genannt, wobei in diesem Fall aus experimentellen Gründen die freie Energie der Grenzfläche Flüssigkeit zu mit Molekülen der Flüssigkeit gesättigte Dampf gemeint ist. Die Oberflächenenergien betragen für die zuvor genannten Flüssigkeiten:

Wasser: 72,5 mN/m

Formamid: 58 mN/m

Ethylenglykolmonoethylether: 30 mN/m

Aceton: 23,3 mN/m

Methanol: 22,6 mN/m

Ethanol: 22,5 mN/m

Hexan: 18,4 mN/m

Pentan: 16,0 mN/m

Die genannten reinen Flüssigkeiten kann der Fachmann jeweils als Prüfflüssigkeiten verwenden, er kann jedoch auch zwei oder mehr der reinen Flüssigkeiten zu einer Prüfflüssigkeit mischen, um eine gewünschte Oberflächenenergie und Verdunstungsrate der Prüfflüssigkeit zu erzielen.

Als Prüfflüssigkeit ist erfindungsgemäß Wasser bevorzugt. Wassertropfen reagieren durch Veränderung des Kontaktwinkels besonders empfindlich auf unterschiedliche Oberflächenenergien sowohl von metallischen Oberflächen als auch von Kunststoff-Oberflächen. Zum Beurteilen der Oberflächengüte und damit auch der Benetzungseigenschaften hydrophober Oberflächen ist es ebenfalls bevorzugt, ein Gemisch aus Wasser und Ethanol oder ein Gemisch aus Ethanol und Hexan zu verwenden, oder als Prüfflüssigkeit reines Ethanol oder Hexan zu verwenden.

Die Prüfflüssigkeit ist vorzugsweise frei von rückstandsbildenden Bestandteilen, insbesondere frei von Farbstoffen. Dadurch wird erreicht, dass die erfindungsgemäß überprüften Oberflächen nicht mit Prüfflüssigkeitsrückständen verschmutzt werden.

Die zu prüfende Oberfläche wird im zweiten Schritt des Prüfverfahrens mit dem Sprühnebel in Kontakt gebracht, um die zu prüfende Oberfläche mit Tropfen des Sprühnebels zu versehen. Die zu prüfende Oberfläche wird in diesem Schritt mit einer zufälligen Anordnung von Prüfflüssigkeitstropfen versehen, deren jeweiliges Tropfenvolumen nicht von vornherein bekannt zu sein braucht, sondern wie bei Sprühnebeln üblich um ein mittleres Tropfenvolumen schwanken kann.

Die zu prüfende Oberfläche wird dem Sprühnebel ausgesetzt, bis sie in einem gewünschten Ausmaß mit der Prüfflüssigkeit bedeckt ist. Die zu prüfende Oberfläche kann dabei dem Sprühnebel kurzzeitig ausgesetzt werden, um ein Zusammenfließen mehrerer Sprühnebeltropfen zu vermeiden. Das Zusammenfließen mehrerer Sprühnebeltropfen wird ausreichend vermieden, wenn die Bedeckungsgrade der Oberfläche mit der Prüfflüssigkeit 10% nicht überschreiten. In diesem Fall sind zum Bestimmen der Verteilung von Prüfflüssigkeitströpfchen-Kontaktwinkeln die Kenntnis der in Sprühnebel vorliegenden Prüfflüssigkeitströpfchen-Volumenverteilung sowie das Bestimmen der auf der zu untersuchenden Oberfläche vorliegenden Prüfflüssigkeitströpfchen-Durchmesserverteilung ausreichend. Sollen große Bauteiloberflächen erfasst werden, ist es vorteilhaft, wenn das eingesetzte Prüfaerosol aus wenigen großen Tropfen besteht, wie es beispielsweise durch die Verwendung von Zweistoffzerstäuberdüsen zugänglich ist.

Die zu prüfende Oberfläche kann jedoch auch so mit dem Sprühnebel in Kontakt gebracht werden, dass auf der Oberfläche eine Vereinigung mehrerer Prüfflüssigkeitstropfen zugelassen wird. Bei Verwendung einer Prüfflüssigkeit mit hoher Oberflächenenergie wie Wasser führt dies dazu, dass die Größen der auf der zu prüfenden Oberfläche während der Erfassung vorliegenden Tropfen in Oberflächenbereichen hoher Oberflächenenergie deutlich verschieden ist von der in Oberflächenbereichen niedriger Oberflächenenergie. Der Grund hiefür ist, dass bei einem kleinen Kontaktwinkel, wie er in Oberflächenbereichen hoher Oberflächenenergie auftritt, die Prüfflüssigkeitstropfen mit hoher Oberflächenenergie eine jeweils große Fläche einnehmen, so dass die Wahrscheinlichkeit für ein Zusammenfließen mehrerer Tropfen groß ist. In Bereichen kleiner Oberflächenenergie jedoch nähern sich die Tropfen einer Prüfflüssigkeit hoher Oberflächenenergie der Kugelform an, so dass jeder Tropfen nur eine geringe Fläche der zu prüfenden Oberfläche überdeckt und ein Zusammenfließen mehrerer Tropfen somit unwahrscheinlicher als in einem Oberflächenbereich hoher Oberflächenenergie wird. Durch das Zusammenfließen mehrerer Prüfflüssigkeitstropfen wird zwar das automatische Bestimmen der Kontaktwinkel erschwert; dies ist jedoch kein Nachteil, denn eine Auswertung der Tropfendurchmesserverteilung ist bereits zum Bestimmen der Oberflächengüte ausreichend. Bei mit einer hydrophoben Substanz verschmutzten, ansonsten hydrophilen Oberflächen und Verwendung einer polaren Prüfflüssigkeit ist die Tropfendurchmesserverteilung im verschmutzten Bereich im Vergleich zum unverschmutzten Bereich zu kleineren Größen hin verschoben. Eine bimodale Tropfendurchmesserverteilung zeigt somit an, dass im zugehörigen untersuchten Bereich sowohl verschmutzte als auch unverschmutzte Oberflächenabschnitte vorhanden sind. Wird zur oben beschriebenen Erhöhung der Tropfengrößenunterschiede das Vereinigen von mehreren Aerosoltropfen auf der zu prüfenden Oberfläche zugelassen, so ist der Einsatz von Aerosolen mit einer hohen Tropfenanzahl und kleinen mittleren Tropfendurchmessern vorteilhaft, wie sie sich durch die Verwendung eines Ultraschallzerstäubers erzeugen lassen.

Der Prüfflüssigkeits-Sprühnebel kann in bevorzugten Ausführungsformen des erfindungsgemäßen Prüfverfahrens solange auf die Oberfläche aufgebracht werden, bis zu erwarten ist, dass die aufgebrachten Prüfflüssigkeitstropfen in solchen Bereichen zu einer geschlossenen Fläche zusammenfließen, in denen die zu prüfende Oberfläche eine geforderte Oberflächengüte besitzt. Insbesondere bei Oberflächen hoher Oberflächenenergie und Verwendung einer Prüfflüssigkeit hoher Oberflächenenergie befinden sich dann nur noch in solchen Oberflächenabschnitten Prüfflüssigkeitstropfen, in denen die Oberfläche beispielsweise durch eine Verschmutzung eine geringere Oberflächenenergie aufweist als gefordert. In diesem Fall zeigt das Vorliegen von Prüfflüssigkeitstropfen eine Abweichung von der geforderten Oberflächengüte an.

In Schritt c) des erfindungsgemäßen Prüfverfahrens werden die auf der zu prüfenden Oberfläche befindlichen Tropfen in einem vorgewählten Bereich gleichzeitig erfasst. Zweckmäßigerweise werden die Tropfen gleichzeitig erfasst durch ein automatisiertes fotografisches Verfahren, beispielsweise mit einer CCD-Kamera. Durch das gleichzeitige Erfassen der Tropfen des vorgewählten Bereichs ist es auf vorteilhaft einfache Weise möglich, die zu prüfende Oberfläche von den Tropfen der Prüfflüssigkeit bereits wieder zu reinigen, während das Prüfverfahren noch andauert und seine Schritte d) und/oder e) ausgeführt werden. Gegenüber herkömmlichen Verfahren, bei denen die Auswertung stets anhand eines einzelnen Tropfens erfolgte, ermöglicht das erfindungsgemäße Vorgehen eine erhebliche Zeiteinsparung. Zudem braucht die zu prüfende Oberfläche nur kurzzeitig mit Tropfen der Prüfflüssigkeit versehen zu sein, so dass beispielsweise auf Metalloberflächen eine Korrosion anders als beispielsweise in H. B. Linford und E. B. Saubestre in Plating, August 1951, 847 bis 855 "Cleaning an preparation of metals for electroplating - Degreasing evaluation tests: The atomizer test" beschrieben praktisch vollständig vermieden werden kann. Zudem ist durch das gleichzeitige Erfassen aller Tropfen eines vorgewählten Bereichs sichergestellt, dass keine zeitliche Verzögerung zwischen dem Auswerten verschiedener Prüfflüssigkeitstropfenauftritte und ggf. das Prüfergebnis beeinträchtigen könnte. Bei herkömmlichen Prüfverfahren hingegen, in denen einzelne Tropfen nacheinander ausgewertet werden, ist es möglich, dass beispielsweise durch Verdunstungseffekte Tropfengrößen während des Auswertevorgangs signifikant verändert werden und so ein falsches Prüfergebnis hervorrufen.

In Schritt d) des erfindungsgemäßen Prüfverfahrens wird die Werteverteilung einer Tropfeneigenschaft anhand der erfassten Tropfen bestimmt. Dieses Bestimmen geschieht vorzugsweise automatisch, insbesondere bevorzugt anhand von in Schritt c) aufgenommenen elektronisch lesbaren Bilddaten des ausgewählten Oberflächenbereichs.

Die in Schritt d) bestimmte Werteverteilung einer Tropfeneigenschaft wird mit einer Referenz-Werteverteilung in Schritt e) verglichen, um die Oberflächengüte des vorgewählten Bereichs zu ermitteln. Die Referenz-Werteverteilung wird zweckmäßigerweise gewonnen, indem die Schritte a) bis d) des erfindungsgemäßen Prüfverfahrens anhand einer Oberfläche bestimmt werden, die außerdem eine vorgewählte Oberflächengüte des vorgewählten Bereichs besitzt. Das erfindungsgemäße Prüfverfahren kann so auf vorteilhaft einfache Weise zum Bestimmen der Oberflächengüte eines vorgewählten Bereichs einer Oberfläche kalibriert werden.

Die in Schritt d) bestimmte Werteverteilung ist vorzugsweise eine Verteilung der Tropfendurchmesser. Tropfendurchmesser können besonders einfach anhand fotografischer Aufzeichnungen ermittelt werden, wie sie insbesondere zum Durchführen des Schritts c) bevorzugt sind. Das Bestimmen der Tropfendurchmesserverteilung erlaubt zudem ein besonders einfaches Prüfen der Oberflächengüte: Ist die Tropfendurchmesserverteilung bi- oder multimodal, so sind Teile der zu prüfenden Oberfläche in deren vorgewählten Bereich verschmutzt oder anderweitig von unterschiedlicher Oberflächengüte. Die Oberflächenteile mit abweichender Oberflächengüte sind dabei deutlich größer als einzelne Tropfen. Eine bi- oder multimodale Tropfendurchmesserverteilung kann beispielsweise zum Feststellen von Fingerabdrücken auf einer zu prüfenden Oberfläche verwendet werden.

Ist die Tropfendurchmesserverteilung unimodal, jedoch im Vergleich zur Referenz-Tropfengrößenverteilung verschoben, so zeigt diese eine Abweichung der Oberflächengüte von der beim Ermitteln der Referenz-Tropfengrößenverteilung vorliegenden Oberflächengüte an. Wenn die Tropfenform trotz ideal ebener Topographie in der Draufsicht von einer Kreisform abweicht, so besitzen Teile des ausgewählten Bereichs der zu prüfenden Oberfläche eine vom übrigen ausgewählten Bereich abweichende Oberflächengüte, wobei diese Teile der abweichenden Oberflächengüte in etwa die gleiche Fläche oder eine kleinere Fläche einnehmen als die Kontaktfläche der Prüfflüssigkeitstropfen mit der zu prüfenden Oberfläche. Die Abweichung von der Kreisgeometrie kann beispielsweise bestimmt werden anhand zweier senkrecht zu einander ausgerichteter Tropfendurchmesser-Linien, oder anhand des Formfaktors

$$U / \sqrt{A} \geq 2\sqrt{\pi} \quad ,$$

wobei das Verhältnis zwischen Tropfenumfang U und Tropfenfläche A umso größer ist, je stärker die Tropfenform in der Draufsicht von einer Kreisgeometrie abweicht.

Zusätzlich oder alternativ zur Tropfendurchmesserverteilung ist es bevorzugt, als Werteverteilung eine Verteilung der Tropfenvolumina in Schritt d) des erfindungsgemäßen Prüfverfahrens zu bestimmen. Die Tropfenvolumina können beispielsweise anhand des Tropfendurchmessers und des konventionell ermittelten Kontaktwinkels bestimmt werden . Zweckmäßigerweise wird die zu prüfende Oberfläche in diesem Fall so mit dem Sprühnebel versehen, dass ein Zusammengehen mehrerer Prüfflüssigkeitstropfen weitgehend vermieden wird. Aus der Tropfenvoluminaverteilung, und der Tropfendurchmesserverteilung auf der geprüften Oberfläche kann dann ein über viele Tropfen gemittelter Kontaktwinkel einer Oberfläche berechnet werden, der als Grundlage für die Bewertung der Oberflächengüte dienen kann.

Zum Erfassen der Tropfen in Schritt c) wird der vorgewählte Bereich vorzugsweise mit Auflicht, Schräglicht, Streiflicht und/oder im Hell- oder Dunkelfeld beleuchtet. Mit diesen Beleuchtungsverfahren lässt sich ein guter optischer Kontrast zwischen Prüfflüssigkeitstropfen und der zu prüfenden Oberfläche erzielen. Besonders bevorzugt ist es, zum Erfassen der Tropfen in Schritt c) den vorgewählten Bereich im Schräglicht, Streiflicht oder im Dunkelfeld zu beleuchten. Auf diese Weise treten die zu erfassenden Tropfen besonders deutlich hervor. Zudem wirken sich farbige Oberflächenmuster kaum auf die Erfassung der Tropfen aus.

Bevorzugt ist zudem ein erfindungsgemäßes Prüfverfahren, bei dem zu jedem bildlich erfassten Tropfen die Fläche desjenigen Teils des Bildes des Tropfens bestimmt wird, deren Inhalt über ("helle Fläche") bzw. unter ("dunkle Fläche") einem vorgegebenen Helligkeitsschwellwert liegt. Der Unterschied zwischen der Größe der "hellen Fläche" und der Größe der "dunklen Fläche" ist dann ein Maß für die Abplattung des Tropfens (also dem Verhältnis zwischen dem Durchmesser des Tropfens in Aufsicht und der Tropfenhöhe) und somit ein Maß für den Kontaktwinkel zwischen dem Tropfen und der unter dem Tropfen liegenden, zu prüfenden Oberfläche. Besonders bevorzugt wird das Verhältnis der Größe der "hellen Fläche" zur "dunklen Fläche" als Maß für den Kontaktwinkel des jeweiligen Tropfens gewählt. Generell gilt, dass ein eher punktförmiges Bild der Lichtquelle bzw. eine geringe Größe der "hellen Fläche" ein Zeichen für einen hohen Kontaktwinkel und entsprechend einen eher kugelförmigen Tropfen ist, während eine hohe Größe der "hellen Fläche" ein Zeichen für einen geringen Kontaktwinkel und entsprechend für einen eher flachen Tropfen ist.

Zweckmäßig ist es, eine Lichtquelle zu wählen, die nicht lediglich ein punktförmiges Bild erzeugt, wenn ein ebener Flüssigkeitsfilm beleuchtet wird. Zweckmäßigerweise wird die Größe der stattdessen verwendeten flächigen Lichtquelle auf den erwarteten Kontaktwinkel der Prüfflüssigkeitstropfen und optional auf die Ausrichtung der zu prüfenden Oberfläche relativ zur Lichtquelle und zu den Erfassungsmitteln (üblicherweise eine Kamera) der Tropfen abgestimmt. Dabei wird die Fläche der Lichtquelle vergrößert, wenn die "helle Fläche" zu klein ist, um bei einer Änderung des Kontaktwinkels eine statistisch signifikant messbare Änderung der Größe der "hellen Fläche" zu erzielen. Die Fläche der Lichtquelle wird verkleinert, wenn die "dunkle Fläche" zu klein ist, um bei einer Änderung des Kontaktwinkels eine statistisch signifikant messbare Änderung der Größe der "dunklen Fläche" zu erzielen.

Ebenfalls bevorzugt ist es, wenn die Lichtquelle ein nicht-kreisförmiges Bild auf die Tropfen wirft. Besonders bevorzugt ist das Bild der Lichtquelle dreieckig, quadratisch, rautenförmig oder kreuzförmig. Die Verzerrung des vom einzelnen Tropfen reflektierten Bildes der Lichtquelle ist dann ein Maß für den Kontaktwinkel zwischen dem Tropfen und der zugeordneten zu prüfenden Oberfläche.

Ferner ist es bevorzugt, wenn Schritt c) zumindest ein weiteres Mal im zeitlichen Abstand nach einem ersten Durchführen von Schritt c) durchgeführt wird und die Werteverteilung anhand der zeitlichen Veränderung der Werte einer Tropfeneigenschaft bestimmt wird. Beispielsweise kann bei bekannter Verdunstungsrate der Prüfflüssigkeit das Tropfenvolumen einfach anhand der zeitlichen Veränderung der Tropfendurchmesser ermittelt werden. Eine Abweichung der ermittelten Werteverteilungen zu verschiedenen Zeitpunkten, beispielsweise von Tropfendurchmesserverteilungen und/oder Tropfenvolumenverteilungen, gegenüber den jeweils zugehörigen Referenz-Werteverteilungen zeigt eine Abweichung der Oberflächengute von einer Referenz-Oberflächengüte an. Zweckmäßig ist es dabei, die zu prüfende Oberfläche mit Wärme zu behandeln, vorzugsweise durch eine Infrarot-Lichtquelle.

Ebenfalls bevorzugt ist es, einzelne oder mehrere und vorzugsweise alle erfassten Tropfen nicht oder nicht lediglich anhand ihrer Helligkeit oder ihres Helligkeitskontrastes im sichtbaren Licht zu erfassen und/oder die Helligkeit bzw. den Helligkeitskontrast im sichtbaren Licht der Werteverteilung einer Tropfeneigenschaft zugrunde zu legen, sondern alternativ oder zusätzlich dazu ein Wärmebild der Tropfen zu erfassen. Werden die Tropfen mit Wärme beaufschlagt, beispielsweise durch eine starke Lichtquelle, so beginnen die Tropfen zu verdunsten. Dabei kühlen sie ab und erscheinen so als kühlere Bereiche in einem Wärmebild.

Ebenfalls bevorzugt ist es, wenn die Tropfen mit Licht einer Wellenlänge bestrahlt werden, die von der die Tropfen bildenden Prüfflüssigkeit stark und von der zu prüfenden Oberfläche nicht oder weniger stark absorbiert wird. Die Tropfen erscheinen dann dunkel vor dem hellen Hintergrund der zu prüfenden Oberfläche. Das zuvor mit Blick auf reflektiertes Licht Gesagte gilt dann entsprechend umgekehrt. Besonders zweckmäßig ist es, wenn die Prüfflüssigkeit frei von Farbstoffen ist, die nicht im wesentlichen rückstandsfrei von der zu prüfenden Oberfläche verdunsten können. Besonders bevorzugt ist es deshalb, als Prüfflüssigkeit lediglich die eingangs genannten Prüfflüssigkeiten und deren Mischungen zu verwenden.

Ebenfalls bevorzugt ist es, vor dem Erfassen der Tropfen einen Polfilter vorzusehen. Werden die Tropfen mit polarisiertem Licht bestrahlt, so können durch Auswahl und Ausrichten des Polfilters selektiv die Tropfen der Prüfflüssigkeit sichtbar gemacht und erfasst werden. Werden die Tropfen mit unpolarisiertem Licht bestrahlt, so ist das von den Tropfen reflektierte Licht polarisiert, so dass die Tropfen wiederum durch Auswahl und Ausrichtung des Polfilters selektiv sichtbar gemacht und erfasst werden können.

In weiteren bevorzugten Ausführungsformen werden die Tropfen sichtbar gemacht anhand der Phasenverschiebung, die eingestrahltes Licht beim Durchlaufen der Tropfen der Prüfflüssigkeit erfährt. Durch einen Phasenfilter kann selektiv solches Licht erfasst werden, das einen Tropfen durchlaufen hat, so dass selektiv Tropfen der Prüfflüssigkeit erfasst und somit Hintergrundsignale verringert werden können.

Ferner ist es bevorzugt, wenn der zum Durchführen von Schritt c) vorgewählte Bereich anhand eines Kontrastunterschiedes vorgewählt wird. Dazu wird zunächst ein großer Bereich der zu prüfenden Oberfläche erfasst und grob auf einen anhand von Referenzen bestimmten auffällig hohen oder niedrigen Kontrast bezüglich der Helligkeit und/oder Tropfendurchmesser und/oder Tropfenform hin untersucht. Wird ein auffälliger Kontrast festgestellt, so wird der Bereich mit auffälligem Kontrast zur weiteren Prüfung in den Schritt c), d) und e) ausgewählt.

Der zum Durchführen von Schritt c) vorgewählte Bereich kann zudem ausgewählt werden anhand eines Summenparameters, insbesondere anhand der Gesamthelligkeit vorläufig ausgewählten Bereichs der zu prüfenden Oberfläche und dem Vergleich des Summenparameters mit einem Referenz-Summenparameter. Vorzugsweise wird der vorläufig ausgewählte Bereich mit Streiflicht oder im Dunkelfeld beleuchtet, die Gesamthelligkeit des vorläufig ausgewählten Bereichs erfasst und mit einer Referenz-Gesamthelligkeit verglichen. Weicht die Gesamthelligkeit um einen vorgewählten Betrag von der Referenz-Gesamthelligkeit ab, so wird der vorläufig ausgewählte Bereich endgültig ausgewählt und mit einem erfindungsgemäßen Verfahren weiter untersucht. Die Bestimmung einer Gesamthelligkeit ist besonders gut geeignet zum summarischen Überprüfen vorläufig ausgewählter Bereiche, da bei geeigneter Beleuchtung, insbesondere im Streiflicht, die Gesamthelligkeit vorteilhaft mit der Tropfenzahl auf der Oberfläche des vorläufig ausgewählten Bereichs korreliert. Insbesondere ist die Gesamthelligkeit gering, wenn sich auf der zu prüfenden Oberfläche ein durchgehender Prüfflüssigkeitsfilm gebildet hat. Dies ermöglicht es, auch bei auf der zu prüfenden Oberfläche zusammenfließenden Prüfflüssigkeitstropfen schnell eine vorläufige Beurteilung der Oberflächengüte vorzunehmen.

Ferner wird erfindungsgemäß ein Prüfsystem angegeben zum Durchführen des erfindungsgemäßen Prüfverfahrens, nach einer hierin beschriebenen Art, umfassend

a) einen Sprühnebelerzeuger zum Versehen einer zu prüfenden Oberfläche mit Tropfen einer Prüfflüssigkeit,

b) eine Beleuchtungseinheit,

c) ein Bilderfassungssystem zum gleichzeitigen Erfassen der Tropfen in einem vorgewählten Bereich der zu prüfenden Oberfläche, und

d) ein Auswertesystem zum Bestimmen der Werteverteilung gemäß Schritt d) des Prüfverfahrens und zum Durchführen des Vergleichs gemäß Schritt d) des Prüfverfahrens.

In einem solchen Prüfsystem wird das erfindungsgemäße Verfahren vorzugsweise durch eine elektronische Regelung oder Steuerung implementiert.

Die Erfindung wird nachfolgend anhand der Beispiele und der Abbildung näher beschrieben, ohne dass der Gegenstand der vorliegenden Erfindung hierdurch begrenzt werden soll. Es stellen dar:

Figur 1    eine grafische Darstellung des Zusammenhangs zwischen einem Tropfenvolumen, einem Tropfendurchmesser und den zugehörigen Kontaktwinkeln;

Figur 2    Abbildung einer mit Wassertropfen versehenen Aluminium-Oberfläche; und

Figur 3    eine Abbildung einer Aluminium-Folie, die mit einer Ethanol-Wasser-Prüfflüssigkeit besprüht wurde.

Figur 4    eine Abbildung einer partiell beflammten Polypropylen-Oberfläche, die mit einem Wasser-Aerosol besprüht wurde.

Beispiel 1: Bestimmung des Tropfenvolumens anhand von Tropfendurchmesser und Kontaktwinkel

Wird ein Prüfflüssigkeitstropfen bekannten Volumens auf eine Oberfläche appliziert, so hängt der in der Draufsicht erkennbare Tropfendurchmesser vom Kontaktwinkel und der Tropfenform ab. Bei einem Tropfendurchmesser von weniger als 1,7 mm darf als Tropfenform eine Kugelform angenommen werden (W. Possart, Adhesion - Current Research and Applications, Wiley-VCH, Weinheim, 2005). Der Kontaktwinkel kann dann anhand folgender Beziehung berechnet werden:

$$V/D^3 = \pi/24 \times 1/\sin^3\alpha \times (2 - 3 \times \cos\alpha + \cos^3\alpha) \qquad \text{für } \alpha <= 90°$$

und

$$V/D^3 = \pi/24 \times (2 - 3 \times \cos\alpha + \cos^3\alpha) \qquad \text{für } \alpha >= 90°$$

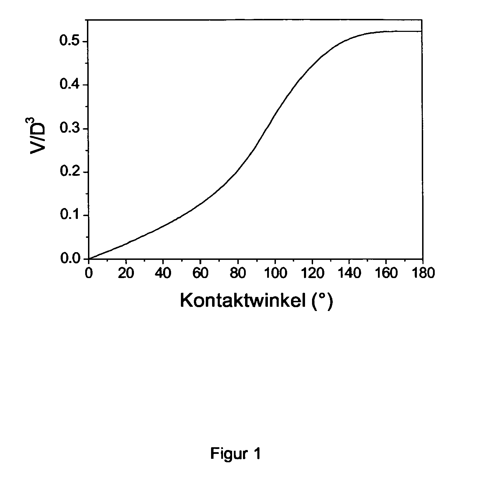

Der Zusammenhang zwischen Tropfenvolumen V, Tropfendurchmesser D und Kontaktwinkel ist in Figur 1 grafisch dargestellt. Es ist zu erkennen, dass bis zu einem Kontaktwinkel von etwa 130° der Funktionsgraph eine deutliche Kurvensteigung zeigt. Bis zu einem Kontaktwinkel von 130° kann somit das Volumen eines Tropfens mit großer Sicherheit berechnet werden anhand des gemessenen Tropfendurchmessers D und des mit herkömmlichen Mitteln bestimmten Kontaktwinkels a durch Auflösen der oben wiedergegebenen Formeln 1 und 2 nach V.

Beispiel 2: Änderung der Tropfendurchmesser-Verteilung einer Prüfflüssigkeit auf kontaminierter Aluminiumoberfläche

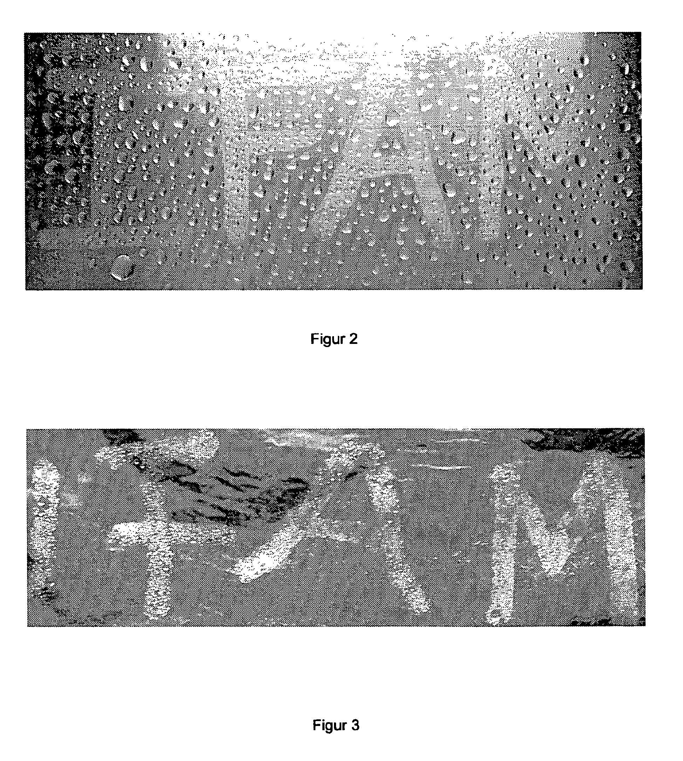

Eine Aluminiumoberfläche wurde mit Silikonöl kontaminiert (Schriftzug "IFAM"). Die Aluminiumoberfläche wurde mit einem Pumpzerstäuber mit Wasser besprüht. Dabei wurde die Vereinigung mehrerer Prüfflüssigkeitstropfen zugelassen. Die Aluminiumoberfläche wurde als ganzes im Schräglicht beleuchtet und zum gleichzeitigen Erfassen des Prüfflüssigkeitstropfens fotografisch erfasst. Figur 2 zeigt die erhaltene Abbildung.

Es ist zu erkennen, dass die Tropfendurchmesser der Prüfflüssigkeit in den mit Silikonöl kontaminierten Bereichen signifikant kleiner sind als in den übrigen Bereichen.

Zum Durchführen der Schritte d) und e) des erfindungsgemäßen Prüfverfahrens wird die Tropfendurchmesserverteilung der in Schritt c) fotografisch erfassten Prüfflüssigkeitstropfen ermittelt. Im vorliegenden Beispiel ist die Tropfendurchmesserverteilung bimodal mit großem Tropfendurchmesser in dem silikonölfreien Bereich der zu prüfenden Oberfläche und mit kleinen Tropfendurchmessern in dem Bereich, in denen die zu prüfende Oberfläche mit Silikonöl kontaminiert ist. Die erhaltene Werteverteilung weicht somit von der erwarteten unimodalen Tropfendurchmesserverteilung ab, die Oberflächengüte der geprüften Oberfläche ist somit eine andere als die einer silikonölfreien Oberfläche.

Beispiel 3: Überprüfen der Oberflächengüte einer Aluminiumoberfläche mit einem Ethanol-Wasser-Gemisch

Eine Aluminiumfolie wurde mit Silikonöl kontaminiert (Schriftzug "IFAM"). Die Aluminiumfolie wurde mit Hilfe eines Pumpzerstäubers mit einem Wasser-Ethanol-Gemisch (10 Vol.-% Ethanol) besprüht, bis die silikonölfreie Aluminiumoberfläche vollständig mit der Prüfflüssigkeit benetzt war. Die Vereinigung mehrerer Prüfflüssigkeitstropfen wurde zugelassen. In Schritt c) des Prüfverfahrens wurde die Aluminiumfolie im Schräglicht beleuchtet und fotografiert. Figur 3 zeigt das erhaltene Bild. Es ist zu erkennen, dass in den mit Silikonöl versehenen Bereichen Prüfflüssigkeitstropfen vorliegen, während die silikonölfreien Bereiche vollständig mit der Prüfflüssigkeit benetzt sind. Die silikonölhaltigen Bereiche der Aluminiumoberfläche erscheinen daher bei Schräg- und Streiflichtbeleuchtung hell.

Zum Durchführen der Schritte d) und e) des Prüfverfahrens wird die Tropfendurchmesserverteilung der Aluminiumoberfläche bestimmt. Bei einer silikonölfreien Oberflächen wird erwartet, dass keine Prüfflüssigkeitstropfen nachweisbar sind. Die ermittelte Tropfengrößenverteilung weicht daher von der Referenz-Tropfengrößenverteilung einer silikonölfreien Aluminiumoberfläche ab; die Oberflächengüte der untersuchten Aluminiumoberfläche unterscheidet sich daher von der einer silikonölfreien Aluminiumoberfläche.

Beispiel 4: Änderung der Tropfendurchmesser-Verteilung einer Prüfflüssigkeit auf einer partiell vorbehandelten Polypropylenoberfläche

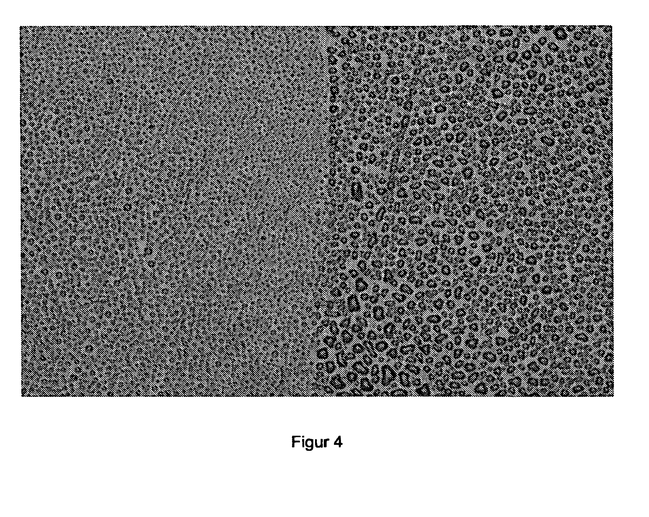

Eine Polypropylenoberfläche wurde partiell durch Beflammung vorbehandelt. Die Polypropylenoberfläche wurde mit einem Ultraschallzerstäuber mit Wasser besprüht. Dabei wurde die Vereinigung mehrerer Prüfflüssigkeitstropfen zugelassen. Die Polypropylenoberfläche wurde als ganzes im Hellfeld beleuchtet und zum gleichzeitigen Erfassen des Prüfflüssigkeitstropfens fotografisch erfasst. Figur 4 zeigt die erhaltene Abbildung.

Es ist zu erkennen, dass die Tropfendurchmesser der Prüfflüssigkeit in den durch Beflammung vorbehandelten Bereichen signifikant größer sind als in den übrigen Bereichen.

Zum Durchführen der Schritte d) und e) des erfindungsgemäßen Prüfverfahrens wird die Tropfendurchmesserverteilung der in Schritt c) fotografisch erfassten Prüfflüssigkeitstropfen ermittelt. Im vorliegenden Beispiel ist die Tropfendurchmesserverteilung bimodal mit großem Tropfendurchmesser in dem beflammten Bereich der zu prüfenden Oberfläche und mit kleinen Tropfendurchmessern in dem unbeflammten Bereich. Die erhaltene Werteverteilung weicht somit von einer unimodalen Tropfendurchmesserverteilung, die auf einer vollständig vorbehandelten Oberfläche zu erwarten wäre, ab. Die Oberflächengüte der geprüften Oberfläche ist somit eine andere als die einer vollständig vorbehandelten Oberfläche.

**Patentansprüche**

1. Prüfverfahren zum Prüfen einer Oberflächengüte, umfassend die Schritte

   a) Erzeugen eines Sprühnebels einer Prüfflüssigkeit,
   b) Inkontaktbringen der zu prüfenden Oberfläche mit dem Sprühnebel, um auf der zu prüfenden Oberfläche Tropfen des Sprühnebels anzuordnen,
   c) in einem vorgewählten Bereich der zu prüfenden Oberfläche gleichzeitiges Erfassen der in dem Bereich angeordneten Tropfen,
   d) Bestimmen der Werteverteilung einer Tropfeneigenschaft, und
   e) Vergleich der ermittelten Werteverteilung mit einer Referenz-Werteverteilung zum Ermitteln der Oberflächengüte des vorgewählten Bereichs.

2. Prüfverfahren nach Anspruch 1, **dadurch gekennzeichnet, dass** die Werteverteilung eine Verteilung der Tropfendurchmesser ist.

3. Prüfverfahren nach einem der vorherigen Ansprüche, **dadurch gekennzeichnet, dass** die Werteverteilung eine Verteilung der Tropfenvolumina, Tropfenaufsichtsflächen, Tropfenumfänge und/oder Formfaktoren ist.

4. Prüfverfahren nach einem der vorherigen Ansprüche, **dadurch gekennzeichnet, dass** zum Erfassen der Tropfen in Schritt c) der vorgewählte Bereich mit Auflicht, Schräglicht, Streiflicht und/oder im Hell- oder Dunkelfeld beleuchtet wird.

5. Prüfverfahren nach einem der vorherigen Ansprüche, **dadurch gekennzeichnet, dass** Schritt c) zumindest ein weiteres Mal in zeitlichem Abstand nach einem ersten Durchführen von Schritt c) durchgeführt wird, und dass die Werteverteilung anhand der zeitlichen Veränderung der Werte einer Tropfeneigenschaft bestimmt wird.

6. Prüfverfahren nach einem der vorherigen Ansprüche, **dadurch gekennzeichnet, dass** der zum Durchführen von Schritt c) vorgewählte Bereich anhand eines Kontrastunterschiedes vorgewählt wird.

7. Prüfsystem zum Durchführen eines Prüfverfahrens nach einem der vorherigen Ansprüche, umfassend

   a) einen Sprühnebelerzeuger zum Versehen einer zu prüfenden Oberfläche mit Tropfen einer Prüfflüssigkeit,
   b) eine Beleuchtungseinheit,
   c) ein Bilderfassungssystem zum gleichzeitigen Erfassen der Tropfen in einem vorgewählten Bereich der zu prüfenden Oberfläche, und
   d) ein Auswertesystem zum Bestimmen der Werteverteilung gemäß Schritt d) des Prüfverfahrens und zum Durchführen des Vergleichs gemäß Schritt e) des Prüfverfahrens.

8. Verwendung eines Prüfsystems nach Anspruch 7 zum Bestimmen der Oberflächengüte einer Polymeroberfläche.

**Claims**

1. A testing method for testing the quality of a surface, comprising the steps:

   a) producing a spray mist of a testing liquid,
   b) bringing the surface to be tested into contact with the spray mist, in order to arrange drops of the spray mist on the surface to be tested,
   c) in a pre-selected region of the surface to be tested, simultaneously detecting the drops arranged in the region,

d) determining the value distribution of a drop property, and

e) comparing the value distribution which is determined with a reference value distribution for determining the quality of the surface of the pre-selected region,

**2.** A testing method according to Claim 1, **characterised in that** the value distribution is a distribution of the drop diameters.

**3.** A testing method according to one of the preceding claims, **characterised in that** the value distribution is a distribution of the drop volumes, drop projected areas, drop circumferences and/or form factors.

**4.** A testing method according to one of the preceding claims, **characterised in that** for detecting the drops in step c) the pre-selected region is illuminated with incident light, oblique light, glancing light and/or in bright field or dark field.

**5.** A testing method according to one of the preceding claims, **characterised in that** step c) is performed at least one further time at a time interval after a first performance of step c), and **in that** the value distribution is determined using the change over time of the values of a drop property.

**6.** A testing method according to one of the preceding claims, **characterised in that** the region pre-selected for performing step c) is pre-selected by means of a difference in contrast.

**7.** A testing system for performing a testing method according to one of the preceding claims, comprising:

a) a spray-mist generator for providing a surface to be tested with drops of a testing liquid,

b) an illumination unit,

c) an image detection system for simultaneously detecting the drops in a pre-selected region of the surface to be tested, and

d) an evaluation system for determining the value distribution in accordance with step d) of the testing method and for performing the comparison in accordance with step e) of the testing method.

**8.** Use of a testing system according to Claim 7 for determining the surface quality of a polymer surface.

**Revendications**

**1.** Procédé pour contrôler la qualité d'une surface, comprenant les étapes

a) production d'un brouillard de nébulisation d'un liquide de contrôle,

b) mise en contact de la surface à contrôler avec le brouillard de nébulisation, en vue de produire un agencement de gouttelettes du brouillard de nébulisation sur la surface à contrôler,

c) relevé simultané, dans une zone présélectionnée de la surface à contrôler, des gouttelettes agencées dans la zone,

d) détermination de la répartition de valeurs d'une propriété de gouttelette, et

e) comparaison de la répartition de valeurs déterminée avec une réparation de référence des valeurs, pour déterminer la qualité de surface de la zone présélectionnée.

**2.** Procédé de contrôle selon la revendication 1, **caractérisé en ce que** la répartition de valeurs est une répartition des diamètres de gouttelette.

**3.** Procédé de contrôle selon l'une des revendications précédentes, **caractérisé en ce que** la répartition de valeurs est une répartition des volumes des gouttelettes, des surfaces des gouttelettes en projection sur le plan de la surface, des périmètres des gouttelettes et/ou de facteurs de forme.

**4.** Procédé de contrôle selon l'une des revendications précédentes, **caractérisé en ce que** pour réaliser le relevé des gouttelettes dans l'étape c), la zone présélectionnée est éclairée par un éclairage incident normal, un éclairage oblique, un éclairage rasant et/ou sur fond clair ou obscure.

**5.** Procédé de contrôle selon l'une des revendications précédentes, **caractérisé en ce que** l'étape c) est répétée au moins une fois de plus un certain intervalle de temps après avoir effectué une première fois l'étape c), et **en ce que** la répartition de valeurs est déterminée au regard de la variation dans le temps des valeurs d'une propriété de gouttelette.

6. Procédé de contrôle selon l'une des revendications précédentes, **caractérisé en ce que** la zone présélectionnée pour effectuer l'étape c) est présélectionnée au regard d'une différence de contraste.

7. Système de contrôle pour la mise en oeuvre du procédé de contrôle selon l'une des revendications précédentes, comprenant

   a) un générateur de brouillard de nébulisation pour munir une surface à contrôler de gouttelettes d'un liquide de contrôle,
   b) une unité d'éclairage,
   c) un système de relevé d'images pour effectuer un relevé simultané des gouttelettes dans une zone présélectionnée de la surface à contrôler, et
   d) un système de traitement et d'exploitation de données pour déterminer la répartition de valeurs selon l'étape d) du procédé de contrôle et pour effectuer la comparaison selon l'étape e) du procédé de contrôle.

8. Utilisation d'un système de contrôle selon la revendication 7 pour déterminer la qualité de surface d'une surface de polymère.

Figur 1

Figur 2

Figur 3

Figur 4

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 3618374 A
- US 5756885 A
- WO 03073045 A1
- JP 52032009 A
- DE 29919100 U1
- DE 10207282 A1

### In der Beschreibung aufgeführte Nicht-Patentliteratur

- **H. B. LINFORD ; E. B. SAUBESTRE.** Cleaning an preparation of metals for electroplating - Degreasing evaluation tests: The atomizer test. *Plating,* 847-855
- **E.K. DABORA.** Production of Monodisperse Sprays. *Review of Scientific Instruments,* 1967, vol. 38 (4), 502-506
- **H. B. LINFORD ; E. B. SAUBESTRE.** Cleaning an preparation of metals for electroplating - Degreasing evaluation tests: The atomizer test. *Plating,* August 1951, 847-855
- **W. POSSART.** Adhesion - Current Research and Applications. Wiley-VCH, 2005